(19) Europäisches Patentamt
European Patent Office
Office européen des brevets

(11) **EP 4 545 311 A1**

(12) **EUROPEAN PATENT APPLICATION**
published in accordance with Art. 153(4) EPC

(43) Date of publication:
**30.04.2025 Bulletin 2025/18**

(21) Application number: **23827152.2**

(22) Date of filing: **19.06.2023**

(51) International Patent Classification (IPC):
**B43K 19/02** (2006.01)   **C09D 13/00** (2006.01)

(52) Cooperative Patent Classification (CPC):
**B43K 19/02; C09D 13/00**

(86) International application number:
**PCT/JP2023/022539**

(87) International publication number:
**WO 2023/248969 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022 JP 2022102022**

(71) Applicant: **MITSUBISHI PENCIL COMPANY,
LIMITED
Tokyo 140-8537 (JP)**

(72) Inventors:
• **ARAI Hiroyuki
Fujioka-shi, Gunma 375-8501 (JP)**
• **ARAI, Hiroyuki
Fujioka-shi, Gunma 375-8501 (JP)**

(74) Representative: **Vossius & Partner
Patentanwälte Rechtsanwälte mbB
Siebertstrasse 3
81675 München (DE)**

(54) **PENCIL LEAD AND MANUFACTURING METHOD FOR SAME**

(57)   Provided are a pencil lead which has sufficient strength at the time of writing even when a tip is pointed, less deterioration due to moisture absorption, and erasability, and can be manufactured without applying a temperature exceeding 500°C, and a method for manufacturing the pencil lead. The pencil lead of the present disclosure contains at least a clay in which the peak of 2θ appears at 12.4 ± 0.5 and/or 24.5 ± 1.0 as measured by XRD, a coloring material, and an alkali metal element. The method for manufacturing the pencil lead includes drying a clay at 50°C to 500°C such that a peak of 2θ appears at 12.4 ± 0.5 and/or 24.5 ± 1.0 as measured by XRD, mixing the dried clay, a coloring material, and an alkali metal hydroxide aqueous solution, molding the mixture, and then performing firing at 50°C to 500°C.

FIG.1

EP 4 545 311 A1

**Description**

Technical Field

The present specification relates to a pencil lead having sufficient strength at the time of writing even when the tip is pointed, less deterioration due to moisture absorption, and erasability; and a method for manufacturing the pencil lead.

Background Art

In the known art, as a pencil lead of a non-fired type or the like, for example, there have been known:

1) in a non-fired type color pencil lead using at least a binder, a filler, a lubricant, and a colorant, a color pencil lead using, as the filler, talc obtained by a wet grinding method and having an average particle size of 10 to 30 $\mu$m (see, for example, Patent Document 1), or a color pencil lead using at least a fibrous material of porous calcium carbonate as a part of the filler (see, for example, Patent Document 2);
2) a color pencil lead containing a resin in which a dye is dissolved or encapsulated in a pencil lead body, the pencil lead body being a fired ceramic lead body fired after blending at least boron nitride and a ceramic bonding material, or a color pencil lead (see, for example, Patent Document 3) being a non-fired ceramic lead body molded after blending at least a ceramic bonding material; and
3) in a pencil lead which is polymer-based, extrudable, non-expanded, and non-calcined, containing expanded graphite in the content of 25 to 100%, advantageously 50 to 100% of the total weight of graphite, and the pencil lead containing graphite in the content of 40 to 60%, advantageously 44 to 50%, a polymer in the content of 15 to 40%, advantageously 20 to 35%, a colorless or white mineral filler in the content of 5 to 15%, advantageously 6 to 10%, carbon black in particular carbon black coated or mixed with polyolefin or polyolefin wax in the content of 5 to 20%, advantageously 5 to 15%, and an additive having a weight of 0 to 16%, advantageously 5 to 15%, with respect to the total weight of the lead (see, for example, Patent Document 4).

However, the pencil leads and the like of Patent Documents 1, 2, and 4 have had problems such as insufficient strength and deterioration due to moisture absorption. Although the color pencil lead of Patent Document 3 is excellent in erasability and the like without impairing strength, further improvement in strength, particularly, sufficient strength at the time of writing even when the tip is pointed and further improvement in moisture absorption resistance and the like are required. When a lead is manufactured by high-temperature firing as described above, a lead having no problem in strength and the like can be manufactured; however, for this purpose, it is necessary to set a temperature of a firing furnace to 800°C or higher, preferably 1000°C or higher, which is a large problem in terms of energy.

Citation List

Patent Document

Patent Document 1: JP H9-12960 A (Claims, Examples, etc.)
Patent Document 2: JP H9-176553 A (Claims, Examples, etc.)
Patent Document 3: JP 2015-160887 A (Claims, Examples, etc.)
Patent Document 4: JP 2008-935 A (Claims, Examples, etc.)

Summary of Invention

Technical Problem

In light of the above-described problems of the known techniques, a current state, and the like, the present disclosure solves them, and an object of the present disclosure is to provide a pencil lead having sufficient strength at the time of writing even when a tip is pointed, less deterioration due to moisture absorption, and having erasability, and a method for manufacturing the pencil lead. Another object of the present invention is to provide a pencil lead that can be manufactured without setting a temperature of a firing furnace to a high temperature exceeding 500°C and a method for manufacturing the pencil lead.

Solution to Problem

As a result of intensive studies in view of the above-described known problems and the like, the present discloser has found that a pencil lead and a method for manufacturing the pencil lead, which are intended above, can be obtained by including at least clay having specific physical properties, a coloring material, and an alkali metal element, and has completed the present disclosure.

That is, the pencil lead of the present disclosure is characterized in that the pencil lead contains at least clay in which a peak of 2θ appears at 12.4 ± 0.5 and/or 24.5 ± 1.0 as measured by XRD, a coloring material, and an alkali metal element, and is characterized in that the pencil lead contains at least clay, a coloring material, and an alkali metal element, and the peak of 2θ appears at 12.4 ± 0.5 and/or 24.5 ± 1.0 as measured by XRD.

The coloring material is preferably selected from carbon particles. The alkali metal element is preferably selected from sodium or potassium.

The method for manufacturing a pencil lead of the present disclosure includes drying a clay at 50°C to 500°C such that a peak of 2θ appears at 12.4 ± 0.5 and/or 24.5 ± 1.0 as measured by XRD, mixing the dried clay, a coloring material, and an alkali metal hydroxide aqueous solution, molding the mixture, and then performing firing at 50°C to 500°C.

The coloring material is preferably selected from carbon particles. The alkali metal hydroxide aqueous solution is preferably selected from sodium hydroxide and potassium hydroxide.

In the present specification (including Examples and the like described later), "XRD" is an abbreviation for X-ray diffraction, specifically, a value measured by MiniFlex (manufactured by Rigaku Corporation). Advantageous Effects of Invention

According to the present disclosure, there are provided a pencil lead, which has sufficient strength at the time of writing even when a tip is pointed, less deterioration due to moisture absorption, and erasability and is suitable for a mechanical pencil, a pencil, and the like, and a method for manufacturing the pencil lead.

The object and effects of the present disclosure can be recognized and obtained especially using the components and combinations indicated in the claims. Both general explanation described above and detailed explanation described below are exemplary and explanatory and do not limit the present disclosure described in claims.

Brief Description of Drawings

FIG. 1 is an XRD pattern of a clay (halloysite) used in Examples 1 to 5 and Comparative Examples 1 and 2.
FIG. 2 is the XRD pattern of a clay (halloysite) used in Examples 6 to 10 and Comparative Example 3.
FIG. 3 is the XRD pattern of a clay (halloysite) used in Examples 11 to 15 and Comparative Examples 4 and 5.
FIG. 4 is the XRD pattern of a clay (halloysite) used in Examples 16 to 20 and Comparative Example 6.
FIG. 5 is the XRD pattern of a clay (dickite) used in Examples 21 and 22.
FIG. 6 is the XRD pattern of a clay (dickite) used in Example 23 and Comparative Example 7.
FIG. 7 is the XRD pattern of a clay (kaolinite) used in Examples 24 and 25.
FIG. 8 is the XRD pattern of a clay (kaolinite) used in Example 26 and Comparative Example 8.
FIG. 9 is the XRD pattern of a clay in a pencil lead manufactured using an untreated clay in Example 27.
FIG. 10 is an explanatory view for describing a test method of tip strength (initial strength).

Description of Embodiments

Embodiments of the present disclosure will be described below in detail. However, it should be noted that the technical scope of the present disclosure is not limited to the embodiments detailed below and includes the invention described in claims and equivalents thereof. In addition, the present disclosure can be implemented based on the contents disclosed in the present specification and technical common knowledge (including design matters and obvious matters) in the art.

A pencil lead of the present disclosure is characterized in that the pencil lead contains at least clay in which a peak of 2θ appears at 12.4 ± 0.5 and/or 24.5 ± 1.0 as measured by XRD, a coloring material, and an alkali metal element in the first disclosure, and is characterized in that the pencil lead contains at least clay, a coloring material, and an alkali metal element, and the peak of 2θ appears at 12.4 ± 0.5 and/or 24.5 ± 1.0 as measured by XRD in the second disclosure.

In the following description, the present disclosure includes both the first disclosure and the second disclosure.

<Clay>

In the first disclosure, as the clay to be used, one in which the peak of 2θ appears at 12.4 ± 0.5 and/or 24.5 ± 1.0 as measured by XRD (X-ray diffraction: XRD) is used.

In the first disclosure, the reason why the clay in which the peak of 2θ appears at 12.4 ± 0.5 and/or 24.5 ± 1.0 as measured by XRD is used is that the effect of the present disclosure can be exhibited by using the clay having this property. That is, the clay having this property value has a clay surface so activated that it can be cured into a polycondensate by the contained alkali metal element to form a lead body, and can be a high-strength porous lead body without performing heating at a very high temperature exceeding 1000°C, which is performed in a conventional firedg lead.

Examples of the clay that can be used include at least one (each alone or a mixture of two or more, the same applies hereinafter) of halloysite, dickite, industrial kaolin clay, sodium aluminosilicate, potassium aluminosilicate, calcium aluminosilicate, beidellite, magnesioferrite, kaolinite, halloysite, montmorillonite, bentonite, and the like. In these clays, further, those in which the peak of 2θ has the above property value as measured by the XRD are used.

In the various clays, one having the above property value can be used as they are. When not having the above property value, the clays can be dried, for example, at 50°C to 500°C, preferably at 80°C to 500°C, and treated by applying a suitable force, to obtain clays having the above property value. Particularly preferably, from the viewpoint of exhibiting better the effects of the present disclosure, production efficiency, and environmental load, a clay having the above property value obtained by drying the various clays at 80°C to 500°C described above is desirable.

The content of the clay having this property value is preferably 10 to 70 mass%, and more preferably 20 to 60 mass% with respect to a total amount of the pencil lead. By setting the content of the clay having this property value to 10 mass% or more, it is possible to obtain such a breakage strength that causes no problem in practical use as in a normal fired porous lead body, and by setting the content to 70 mass% or less, it is possible to obtain a pencil lead that has a smooth writing feel and a drawing line with a high darkness.

<Coloring material>

In the present disclosure, the coloring material to be used is a substance for coloring to make a pencil lead into a color lead, and various pigments (for example, inorganic pigments, organic pigments, fluorescent pigments, and microcapsule pigments), dyes (for example, oil-soluble dyes and salt forming dyes), and the like can be used. Preferable examples of the coloring material that can be used include at least one of inorganic pigments such as graphite, carbon black (furnace black, channel black, acetylene black, thermal black), carbon nanotube, carbon nanofiber, fullerene, titanium oxide, zinc oxide, iron oxide pigment, Prussian blue, Prussian blue, aluminum oxide, barium sulfate, calcium carbonate, chromium oxide, manganese violet, ultramarine blue, chromium hydrate, and ferric blue, organic pigments such as azo organic pigments such as disazo yellow AAA and pyrazolone orange, cyanine organic pigments such as phthalocyanine blue and phthalocyanine green, and high grade organic pigments such as quinacridone red, or bright pigments such as fluorescent pigments, microcapsule pigments, mica titanium, iron oxide-coated mica, iron oxide-coated mica titanium, fine particle titanium oxide-coated mica titanium, fine particle zinc oxide-coated mica titanium, red iron oxide-coated mica titanium, barium sulfate coated mica titanium, titanium oxide containing glass flakes, and zinc oxide-containing silicon dioxide.

Particularly preferably, those selected from carbon particles, that is, graphite, carbon black (furnace black, channel black, acetylene black, thermal black), carbon nanotubes, carbon nanofibers, and fullerenes, and those selected from inorganic pigments, that is, titanium oxide, iron oxide pigments, and the like are preferably used from the viewpoint of weather resistance and heat resistance.

The content of the coloring materials is preferably 30 to 90 mass%, and more preferably 40 to 80 mass% with respect to the total amount of the pencil lead.

When the content of a coloring material is 30 mass% or more, color developability of a drawing line can be good, and when the content is 90 mass% or less, the strength at the time of writing can be good.

<Alkali metal element>

In the present disclosure, the alkali metal element (Li to Fr) to be used is used for a polycondensation reaction of clay mineral, and preferably, the alkali metal element is preferably selected from sodium or potassium from the viewpoint of reactivity.

In the present disclosure, sodium or potassium is contained in the pencil lead from the viewpoint of reactivity, and for example, sodium hydroxide (NaOH), potassium hydroxide (KOH), sodium silicate ($Na_2SiO_3$), potassium silicate ($K_2SiO_3$) and the like which are alkali metal hydroxides can be used.

The content of the alkali metal elements (Na, K, etc.) is preferably 3 mass% or more, and more preferably 3 to 60 mass% with respect to the total amount of the pencil lead in terms of an alkali metal element amount.

When the content of the alkali metal element is 3% by mass or more, a lead body having such a breakage strength that causes no problem in practical use due to the above reaction can be obtained. On the other hand, when the content of the alkali metal element is 60% by mass or less, a porous lead body having suitable continuous pores that are not too dense can be obtained.

The first disclosure is characterized by containing at least a clay in which the peak of $2\theta$ appears at $12.4 \pm 0.5$ and/or $24.5 \pm 1.0$ as measured by the above-described XRD, a coloring material, and an alkali metal element, and in addition, a predetermined amount of an alkali metal salt, an alkaline earth metal salt, an aluminum salt, or the like can be appropriately contained as long as the effect of the present

disclosure is not impaired.

The pores of the obtained pencil lead body may be further filled with lubricating oil.

Examples of the lubricating oil to be used include ester oils such as paraffin oil, $\alpha$-olefin oil, fatty acid ester, and alkylene glycol ether, synthetic oils such as silicone oil, vegetable oils such as castor oil, and grease.

The pencil lead according to the first disclosure can be manufactured by, for example, mixing various clays in which the peak of $2\theta$ appears at $12.4 \pm 0.5$ and/or $24.5 \pm 1.0$ as measured by XRD, the coloring material, and the alkali metal hydroxide aqueous solution, molding the mixture into a predetermined shape, size, and the like, and then performing firing at 50°C to 500°C, and preferably at 50°C to 300°C, using an electric furnace, microwave heating, a vacuum heating furnace, and the like. Preferably, the pencil lead can be manufactured by drying at least the clay at 80°C to 500°C, preferably 80°C to 300°C, such that the peak of $2\theta$ appears in the vicinity of each predetermined value described above as measured by XRD, mixing the dried clay, the coloring material, and the alkali metal hydroxide aqueous solution in respective predetermined amounts, molding the mixture into a predetermined shape, size, and the like, and then performing firing at 50°C to 500°C, preferably 50°C to 300°C using the various heating means and the like. In the pencil lead according to the first disclosure, by using clay in which the peak of $2\theta$ appears at $12.4 \pm 0.5$ and/or $24.5 \pm 1.0$ as measured by XRD, and, in addition, by a specific combination with the alkali metal element in addition to the coloring material to be contained, that is, by a reaction for producing a geopolymer and geopolymerization, the strength is improved, and in particular, it is possible to obtain a pencil lead having sufficient strength at the time of writing even when the tip is pointed, less deterioration due to moisture absorption, and having erasability.

Next, the pencil lead according to the second disclosure contains at least a clay, a coloring material, and an alkali metal element, and its peak of $2\theta$ appears at $12.4 \pm 0.5$ and/or $24.5 \pm 1.0$ as measured by XRD.

In the pencil lead according to the second disclosure, the effect of the present disclosure can be exhibited as long as the pencil lead contains at least the clay, the coloring material, and the alkali metal element in respective predetermined amounts, and the peak of $2\theta$ appears at $12.4 \pm 0.5$ and/or $24.5 \pm 1.0$ in the XRD measurement of the obtained pencil lead.

In the second disclosure, the clay, the coloring material, the alkali metal element, and other components to be used are the same as those in the first disclosure described above, and thus the description thereof is omitted.

The pencil lead according to the second disclosure does not use the clay having the above-described property value like in the first disclosure, but uses the untreated clay according to the first disclosure. A mixture containing components including the untreated clay, the coloring material, and the alkali metal element, is performed firing in a suitable temperature in a range of 50°C to 500°C in accordance with the above-described manufacturing method according to the first disclosure to obtain the pencil lead. When the pencil lead has the peak of $2\theta$ appearing at $12.4 \pm 0.5$ and/or $24.5 \pm 1.0$ as measured by XRD of the clay of the pencil lead, the geopolymerization occurs, the constituent components are bonded to each other to obtain a high-strength lead body as a whole, and the effect of the present disclosure can be exhibited like in the first disclosure.

The reason why the pencil lead according to the second disclosure exerts the effect of the present disclosure as well as the pencil lead according to the first disclosure described above is that the strength is improved as the entire lead becomes a geopolymer, and in particular, a pencil lead having sufficient strength at the time of writing even when the tip is pointed, less deterioration due to moisture absorption, and having erasability is obtained.

The pencil lead of the present disclosure and the method for manufacturing the pencil lead are not limited to the above embodiment, and various modifications can be made within the scope of the technical idea of the present disclosure.

For example, the geopolymerization reaction is more likely to proceed at a higher temperature, and it is industrially usual to accelerate the reaction by heating (firing process), however, the reaction may not be promoted by heating when it is acceptable to take time.

Also in the drying process, when a clay particle surface is sufficiently exposed and activated, this process may be omitted.

Examples and Comparative Examples

Next, the pencil lead of the present disclosure will be described in more detail using Examples and Comparative Examples, but the present disclosure is not limited to the following Examples.

(Examples 1 to 5, Comparative Examples 1 and 2)

Clay: Halloysite (Halloysite-7A) 30 mass%
Coloring material: scaly graphite (CSP, manufactured by Nippon Graphite Industries, Co., Ltd.) 50 mass%
Alkali metal: potassium hydroxide (50% aqueous solution) 20 mass%

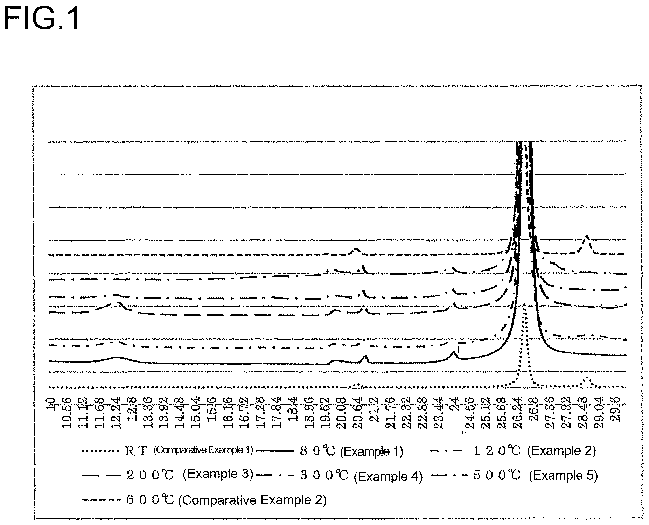

As the above clays, those subjected to a non-firing treatment (RT: room temperature, the same applies hereinafter), a firing treatment at 80°C, a firing treatment at 120°C, a firing treatment at 200°C, a firing treatment at 300°C, a firing treatment at 500°C, and a firing treatment at 600°C were used. It was confirmed from an XRD pattern of FIG. 1 that each clay subjected to the treatment at 80°C to 500°C had the peak of $2\theta$ within a range of $12.5 \pm 0.5$ and/or $24.5 \pm 1.0$ as measured by XRD. In the clay of Comparative Example 1 subjected to the non-firing treatment and the clay of Comparative Example 2 subjected to the firing treatment at 600°C, none of the above peaks was observed.

Using the compounding components, after pelletization, the pellet was molded into a thin wire shape by a screw type extruder and dried at 50°C for 24 hours to obtain a pencil lead having a diameter of 2.5 mm and a length of 180 mm.

(Examples 6 to 10 and Comparative Example 3)

Clay: Halloysite (Halloysite-7A) 30 mass%
Coloring material: scaly graphite (CSP, manufactured by Nippon Graphite Industries, Co., Ltd.) 50 mass%
Alkali metal: sodium hydroxide (50% aqueous solution) 20 mass%

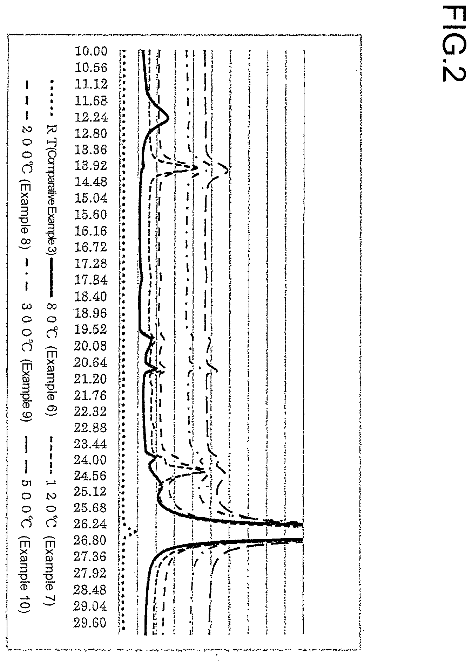

As the above clays, those subjected to a non-firing treatment, a firing treatment at 80°C, a firing treatment at 120°C, a firing treatment at 200°C, a firing treatment at 300°C, and a firing treatment at 500°C were used. It was confirmed from an XRD pattern of FIG. 2 that each clay subjected to the treatment at 80°C to 300°C had the peak of $2\theta$ within a range of $12.5 \pm 0.5$ and $24.5 \pm 1.0$ as measured by XRD. In the clay of Comparative Example 3 subjected to the non-firing treatment, none of the above peaks was observed.

Using the compounding component, after pelletization, the pellet was molded into a thin wire shape by a screw type extruder and dried at 50°C for 24 hours to obtain a pencil lead having a diameter of 2.5 mm and a length of 180 mm.

(Examples 11 to 15, Comparative Examples 4 and 5)

Clay: Halloysite (Halloysite-7A) 30 mass%
Coloring material: scaly graphite (CSP, manufactured by Nippon Graphite Industries, Co., Ltd.) 50 mass%
Alkali metal: potassium silicate (50% aqueous solution) 20 mass%

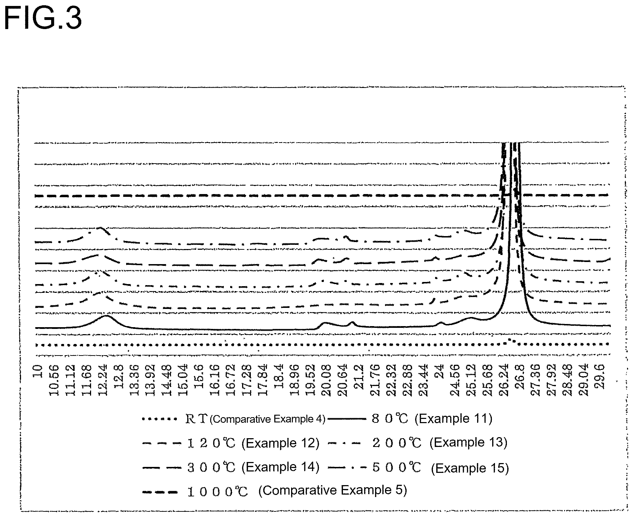

As the above clays, those subjected to a non-firing treatment, a firing treatment at 80°C, a firing treatment at 120°C, a firing treatment at 200°C, a firing treatment at 300°C, a firing treatment at 500°C, and a firing treatment at 1000°C were used. It was confirmed from an XRD pattern of FIG. 3 that in each clay subjected to the treatment at 80°C to 500°C had the peak of $2\theta$ within the range of $12.5 \pm 0.5$ and $24.5 \pm 1.0$ as measured by XRD. In the clay of Comparative Example 4 subjected to the non-firing treatment and the clay of Comparative Example 5 subjected to the firing treatment at 1000°C, none of the above peaks was observed.

Using the compounding component, after pelletization, the pellet was molded into a thin wire shape by a screw type extruder and dried at 50°C for 24 hours to obtain a pencil lead having a diameter of 2.5 mm and a length of 180 mm.

(Examples 16 to 20 and Comparative Example 6)

Clay: Halloysite (Halloysite-7A) 30 mass%
Coloring material: scaly graphite (CSP, manufactured by Nippon Graphite Industries, Co., Ltd.) 50 mass%
Alkali metal: sodium silicate (50% aqueous solution) 20 mass%

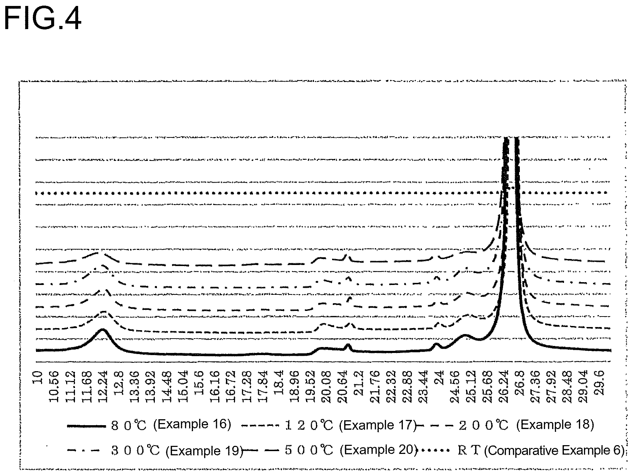

As the above clays, those subjected to a non-firing treatment, a firing treatment at 80°C, a firing treatment at 120°C, a firing treatment at 200°C, a firing treatment at 300°C, and a firing treatment at 500°C were used. It was confirmed from an XRD pattern of FIG. 4 that each clay subjected to the treatment at 80°C to 300°C had the peak of $2\theta$ within the range of $12.5 \pm 0.5$ and $24.5 \pm 1.0$ as measured by XRD. In the clay of Comparative Example 6 subjected to the non-firing treatment, none of the above peaks was observed.

Using the compounding component, after pelletization, the pellet was molded into a thin wire shape by a screw type extruder and dried at 50°C for 24 hours to obtain a pencil lead having a diameter of 2.5 mm and a length of 180 mm.

(Examples 21 and 22)

Clay: Dickite (Dickite-2M1) 30 mass%
Coloring material: scaly graphite (CSP, manufactured by Nippon Graphite Industries, Co., Ltd.) 50 mass%
Alkali metal: potassium hydroxide (50% aqueous solution) 20 mass%

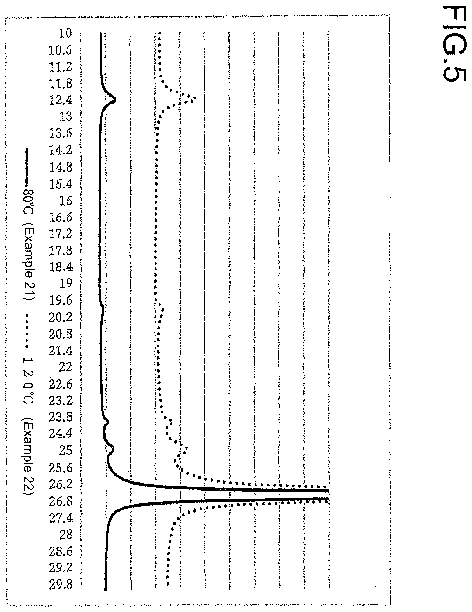

As the above clays, those subjected to a firing treatment at 80°C and a firing treatment at 120°C were used It was confirmed from an XRD pattern of FIG. 5 that each clay subjected to the treatment at 80°C and the treatment at 120°C had the peak of $2\theta$ within the range of $12.5 \pm 0.5$ and $24.5 \pm 1.0$ as measured by XRD.

Using the compounding component, after pelletization, the pellet was molded into a thin wire shape by a screw type extruder and dried at 50°C for 24 hours to obtain a pencil lead having a diameter of 2.5 mm and a length of 180 mm.

(Example 23, Comparative Example 7)

Clay: Dickite (Dickite-2M1) 30 mass%
Coloring material: scaly graphite (CSP, manufactured by Nippon Graphite Industries, Co., Ltd.) 50 mass%
Alkali metal: sodium hydroxide (50% aqueous solution) 20 mass%

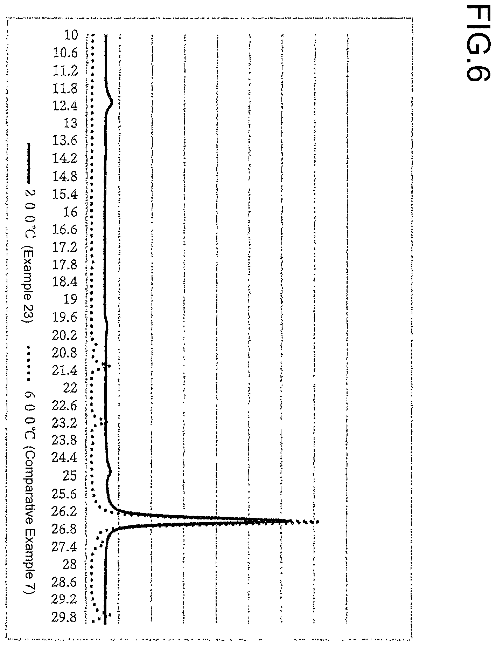

As the above clays, those subjected to a firing treatment at 200°C and a firing treatment at 600°C were used. It was confirmed from an XRD pattern of FIG. 6 that the clay subjected to the treatment at 200°C had the peak of $2\theta$ within the range of $12.5 \pm 0.5$ and $24.5 \pm 1.0$ as measured by XRD. In the clay of Comparative Example 7 subjected to the firing treatment at 600°C, none of the above peaks was observed. Using the compounding component, after pelletization, the pellet was molded into a thin wire shape by a screw type extruder and dried at 50°C for 24 hours to obtain a pencil lead having a diameter of 2.5 mm and a length of 180 mm.

(Examples 24 and 25)

Clay: industrial kaolinite (Kaolinite-1A, manufactured by BASF SE)
30 mass%
Coloring material: scaly graphite (CSP, manufactured by Nippon Graphite Industries, Co., Ltd.) 50 mass%
Alkali metal: sodium hydroxide (50% aqueous solution) 20 mass%

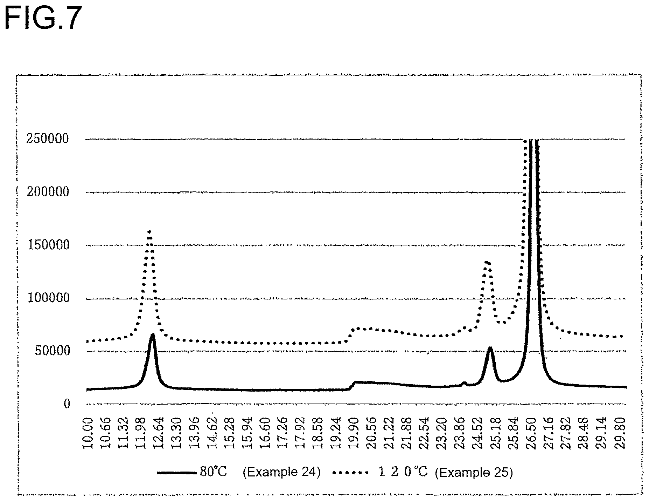

As the above clays, those subjected to a firing treatment at 80°C and a firing treatment at 120°C were used. It was confirmed from an XRD pattern of FIG. 7 that each clay subjected to the treatment at 80°C and the treatment at 120°C had the peak of $2\theta$ within the range of $12.5 \pm 0.5$ and $24.5 \pm 1.0$ as measured by XRD.

Using the compounding component, after pelletization, the pellet was molded into a thin wire shape by a screw type extruder and dried at 50°C for 24 hours to obtain a pencil lead having a diameter of 2.5 mm and a length of 180 mm.

(Example 26, Comparative Example 8)

Clay: industrial kaolinite (Kaolinite-1A, manufactured by BASF SE)
30 mass%

Coloring material: scaly graphite (CSP, manufactured by Nippon Graphite Industries, Co., Ltd.) 50 mass%
Alkali metal: sodium silicate (50% aqueous solution) 20 mass%

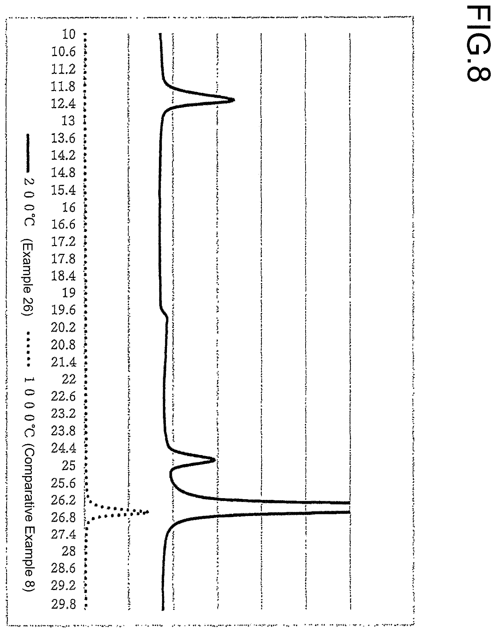

As the above clays, those subjected to a firing treatment at 200°C and a firing treatment at 1000°C were used. It was confirmed from an XRD pattern of FIG. 8 that the clay subjected to the treatment at 200°C had the peak of 2θ within the range of 12.5 ± 0.5 and 24.5 ± 1.0 as measured by XRD. Using the clay of Comparative Example 8 subjected to the firing treatment at 1000°C, none of the above peaks was observed.

In the compounding component, after pelletization, the pellet was molded into a thin wire shape by a screw type extruder and dried at 50°C for 24 hours to obtain a pencil lead having a diameter of 2.5 mm and a length of 180 mm.

(Example 27)

Clay: Halloysite (Halloysite-7A) 30 mass%
Coloring material: scaly graphite (CSP, manufactured by Nippon Graphite Industries, Co., Ltd.) 50 mass%
Alkali metal: sodium hydroxide (50% aqueous solution) 20 mass%

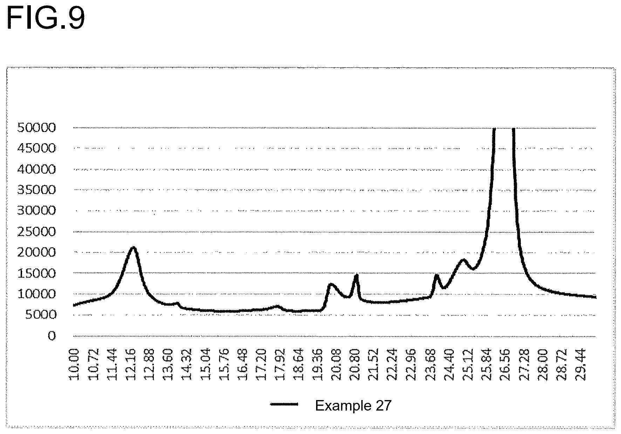

The clay used was not subjected to a firing treatment, and the untreated clay was used, pelletized, and then molded into a thin wire shape with a screw type extruder. A lead body was molded, and then dried at 300°C for 24 hours to obtain a pencil lead having a diameter of 2.5 mm and a length of 180 mm. Thereafter, the lead body of a sample was pulverized, and only clay (halloysite) was selectively extracted and subjected to XRD measurement. From an XRD pattern of FIG. 9, it was confirmed that the peak of 2θ was within the range of 12.5 ± 0.5 and 24.5 ± 1.0 as measured by XRD. As described above, in the clay of Comparative Example 1 subjected to the non-firing treatment (also untreated at the time of manufacturing the lead body), none of the above peaks was observed.

The pencil lead produced in Examples 1 to 27 and Comparative Examples 1 to 8 described above were made into a pencil by a usual method, and used for the following test.

(Reference Example)

Using Hi-Uni 4B manufactured by MITSUBISHI PENCIL COMPANY, LIMITED, the same tip strength test as that for the pencil leads of Examples and Comparative Examples was performed. The result was 5.0 N.

(Test method)

The tip strength, water resistance, and writing feel of the pencils prepared by using the pencil leads of Examples and Comparative Examples obtained above were evaluated by the following test method. These evaluation results are indicated in Tables 1 to 9 below.

[Test method of tip strength]

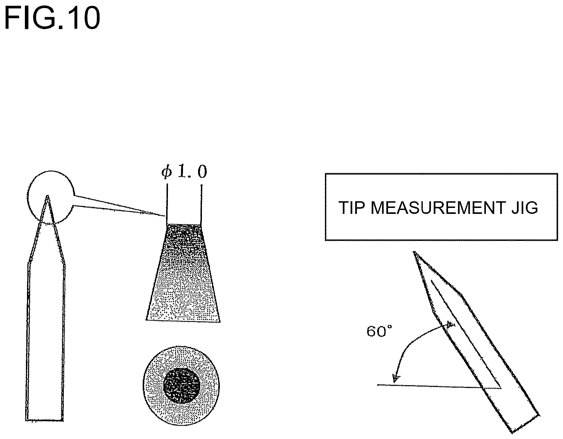

Each of 10 pencil leads obtained in each of the above Examples and Comparative Examples was sharpened such that the tip was pointed under an environment of normal temperature and normal humidity (23°C, 50%) and an environment of high temperature and high humidity (35°C, 80%) using a mini pencil sharpener manufactured by MITSUBISHI PENCIL COMPANY, LIMITED (trade name: Pocket Sharpener DPS-101 PLT). Then, as shown in FIG. 10, the tip was pointed, a tip surface was aligned to about φ1.0 mm, the tip was tilted at 60° using a push-pull gauge (manufactured by IMADA-SS Corporation.), and a stress was applied to measure a maximum stress (unit: N) (initial strength) when the tip was broken. It is shown that the larger the stress, the better the tip strength.

[Test method of water resistance]

First, after flexural strength of an initial lead body was measured, each pencil lead was placed in water under an environment of 25°C and a humidity of 65%, the flexural strength of the lead body after standing for 1 week was measured, and a numerical value of flexural strength D2 after immersion in water was calculated by the following formula when initial flexural strength D1 were set to 100 and compared.

$$\text{Water resistance} = D2/D1 \times 100$$

(Evaluation test of writing feel)

After each of the pencil leads of the above Examples and Comparative Examples was made into a pencil as described above, 10 monitors filled a 400-character manuscript paper by writing "MITSUBISHI PENCIL COMPANY, LIMITED" with the penci. The pencil was evaluated according to the following evaluation criteria while comparing with a pencil of the reference example.

Evaluation criteria:

A: 9 or more out of 10 panelists felt that the pencil was comparable with or smoother than the pencil of the reference example.

B: 3 to 8 out of 10 panelists felt writing resistance higher than that of the pencil of the reference example.

C: 9 or more out of 10 panelists felt writing resistance higher than that of the pencil of the reference example.

[Table 1]

| | Comparative Example 1 | Example 1 | Example 2 | Example 3 | Example 4 | Example 5 | Comparative Example 2 |
|---|---|---|---|---|---|---|---|
| Sintering temperature (°C) | RT | 80 | 120 | 200 | 300 | 500 | 600 |
| Tip strength (N) | 2.8 | 5.9 | 6.3 | 6.7 | 6.4 | 6.8 | 6.8 |
| Water resistance | 105.6 | 97 | 92.1 | 94.7 | 96.6 | 106.1 | 106.1 |
| Writing feel | A | A | A | A | A | B | C |

[Table 2]

| | Comparative Example 3 | Example 6 | Example 7 | Example 8 | Example 9 | Example 10 |
|---|---|---|---|---|---|---|
| Sintering temperature (°C) | RT | 80 | 120 | 200 | 300 | 500 |
| Tip strength (N) | 2.5 | 6 | 5.9 | 6.2 | 6.3 | 6.5 |
| Water resistance | 45.6 | 115.2 | 98.2 | 96.1 | 97.6 | 112.4 |
| Writing feel | A | A | A | A | A | B |

[Table 3]

| | Comparative Example 4 | Example 11 | Example 12 | Example 13 | Example 14 | Example 15 | Comparative Example 5 |
|---|---|---|---|---|---|---|---|
| Sintering temperature (°C) | RT | 80 | 120 | 200 | 300 | 500 | 1000 |
| Tip strength (N) | 2.7 | 6.9 | 7.7 | 7.2 | 9 | 8.5 | 11.8 |
| Water resistance | 59.8 | 91.2 | 90.3 | 97.1 | 95.5 | 105.5 | 105.5 |

(continued)

|  | Comparative Example 4 | Example 11 | Example 12 | Example 13 | Example 14 | Example 15 | Comparative Example 5 |
|---|---|---|---|---|---|---|---|
| Writing feel | A | A | A | A | A | B | C |

[Table 4]

|  | Comparative Example 6 | Example 16 | Example 17 | Example 18 | Example 19 | Example 20 |
|---|---|---|---|---|---|---|
| Sintering temperature (°C) | RT | 80 | 120 | 200 | 300 | 500 |
| Tip strength (N) | 3.4 | 9.6 | 10.8 | 10.7 | 10.9 | 10.5 |
| Water resistance | 60 | 86.7 | 92.2 | 91.8 | 98.7 | 100.4 |
| Writing feel | A | A | A | A | A | B |

[Table 5]

|  | Example 21 | Example 22 |
|---|---|---|
| Sintering temperature (°C) | 80 | 120 |
| Tip strength (N) | 5.6 | 6.6 |
| Water resistance | 101.5 | 100 |
| Writing feel | A | A |

[Table 6]

|  | Example 23 | Comparative Example 7 |
|---|---|---|
| Sintering temperature (°C) | 200 | 600 |
| Tip strength (N) | 7.1 | 8.6 |
| Water resistance | 93.6 | 100 |
| Writing feel | A | A |

[Table 7]

|  | Example 24 | Example 25 |
|---|---|---|
| Sintering temperature (°C) | 80 | 120 |
| Tip strength (N) | 5.3 | 6.3 |
| Water resistance | 102.8 | 91.3 |
| Writing feel | A | A |

[Table 8]

|  | Example 26 | Comparative Example 8 |
|---|---|---|
| Sintering temperature (°C) | 200 | 1000 |
| Tip strength (N) | 9.8 | 9.7 |
| Water resistance | 92.1 | 92 |
| Writing feel | A | C |

[Table 9]

|  | Example 27 |
| --- | --- |
| Sintering temperature (°C) | 300 |
| Tip strength (N) | 5.4 |
| Water resistance | 105.5 |
| Writing feel | A |

As is apparent from the results in Tables 1 to 9 above, the pencil leads of Examples 1 to 27 within the scope of the present disclosure (first disclosure and second disclosure) were found to be pencil leads which had sufficient strength at the time of writing even when the tip is pointed, as compared with Comparative Examples 1 to 8 outside the scope of the present disclosure, were comparable in the tip strength and the writing feel as compared with a current pencil, and also had no significant deterioration in water resistance. In addition, as described above, it was possible to obtain a pencil lead that can be manufactured without applying a temperature higher than 500°C at the time of manufacturing.

Further, it has been confirmed that the pencil leads of Examples 1 to 27 within the scope of the present disclosure had good erasability with an eraser as with the pencil lead of the reference example.

Industrial Applicability

A pencil lead suitable for a mechanical pencil, a pencil, and the like, which does not include a manufacturing process at a high temperature exceeding 500°C and has a low environmental load, can be obtained.

**Claims**

1. A pencil lead comprising:

   at least a clay in which a peak of $2\theta$ appears at $12.4 \pm 0.5$ and/or $24.5 \pm 1.0$ as measured by XRD;
   a coloring material; and
   an alkali metal element.

2. The pencil lead according to claim 1, wherein the coloring material is selected from carbon particles.

3. The pencil lead according to claim 1 or 2, wherein the alkali metal element is selected from sodium or potassium.

4. A pencil lead comprising:

   at least a clay;
   a coloring material; and
   an alkali metal element,
   wherein a peak of $2\theta$ appears at $12.4 \pm 0.5$ and/or $24.5 \pm 1.0$ as measured by XRD.

5. A method for manufacturing a pencil lead comprising drying a clay at 50°C to 500°C in such a way that a peak of $2\theta$ appears at $12.4 \pm 0.5$ and/or $24.5 \pm 1.0$ as measured by XRD, mixing the dried clay, a coloring material, and an alkali metal hydroxide aqueous solution, molding the mixture, and then performing firing at 50°C to 500°C.

6. The method for manufacturing a pencil lead according to claim 5, wherein the coloring material is selected from carbon particles.

7. The method for manufacturing a pencil lead according to claim 5 or 6, wherein the alkali metal hydroxide is selected from sodium hydroxide or potassium hydroxide.

# FIG.1

# FIG.2

······ R T (Comparative Example 3) ——— 8 0 ℃ (Example 6)    ----- 1 2 0 ℃ (Example 7)

— — — 2 0 0 ℃ (Example 8)  — · — 3 0 0 ℃ (Example 9)   —— — 5 0 0 ℃ (Example 10)

# FIG.3

•••••• R T (Comparative Example 4) ———— 8 0 ℃ (Example 11)

— — — 1 2 0 ℃ (Example 12) — • — 2 0 0 ℃ (Example 13)

—— —— 3 0 0 ℃ (Example 14) —— • • – 5 0 0 ℃ (Example 15)

— — — 1 0 0 0 ℃ (Comparative Example 5)

FIG.4

10 10.56 11.12 11.68 12.24 12.8 13.36 13.92 14.48 15.04 15.6 16.16 16.72 17.28 17.84 18.4 18.96 19.52 20.08 20.64 21.2 21.76 22.32 22.88 23.44 24 24.56 25.12 25.68 26.24 26.8 27.36 27.92 28.48 29.04 29.6

―――― 8 0℃ (Example 16) ――――・ 1 2 0℃ (Example 17)― ― ― 2 0 0℃ (Example 18)

― ・ ― 3 0 0℃ (Example 19)― ― 5 0 0℃ (Example 20)・・・・・ R T (Comparative Example 6)

# FIG.5

80℃ (Example 21)  ‥‥‥‥ 1 2 0℃ (Example 22)

FIG.6

2 0 0 ℃ (Example 23)    •••••• 6 0 0 ℃ (Comparative Example 7)

# FIG.7

FIG.8

# FIG.9

Example 27

# FIG.10

$\phi 1.0$

TIP MEASUREMENT JIG

60°

## INTERNATIONAL SEARCH REPORT

International application No.

**PCT/JP2023/022539**

### A. CLASSIFICATION OF SUBJECT MATTER

*B43K 19/02*(2006.01)i; *C09D 13/00*(2006.01)i
FI:   C09D13/00; B43K19/02 K; B43K19/02 J

According to International Patent Classification (IPC) or to both national classification and IPC

### B. FIELDS SEARCHED

Minimum documentation searched (classification system followed by classification symbols)

B43K19/02; C09D13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 62-201982 A (PENTEL KK) 05 September 1987 (1987-09-05)<br>    claims, p. 2, lower right column, line 8 to p. 3, lower right column, line 10 | 1-4 |
| X | JP 2005-082808 A (FABER-CASTELL AG) 31 March 2005 (2005-03-31)<br>    claims, paragraphs [0015]-[0024] | 1-4 |
| X | CN 113493630 A (HANGZHOU TRUTH CHEM NEW MATERIAL CO., LTD.) 12 October 2021 (2021-10-12)<br>    paragraphs [0024]-[0081] | 1-4 |
| A | JP 02-155965 A (J.S. STAEDTLER GMBH & CO.) 15 June 1990 (1990-06-15)<br>    entire text | 1-7 |
| A | JP 01-217090 A (FUEKI NORI KOGYO KK) 30 August 1989 (1989-08-30)<br>    entire text | 1-7 |
| A | JP 2004-285250 A (PILOT PRECISION CO LTD) 14 October 2004 (2004-10-14)<br>    entire text | 1-7 |

☐ Further documents are listed in the continuation of Box C.    ☑ See patent family annex.

| | | |
|---|---|---|
| \* | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| **04 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/022539**

| Patent document cited in search report | | | Publication date (day/month/year) | Patent family member(s) | | | Publication date (day/month/year) |
|---|---|---|---|---|---|---|---|
| JP | 62-201982 | A | 05 September 1987 | (Family: none) | | | |
| JP | 2005-082808 | A | 31 March 2005 | US claims, paragraphs [0016]-[0025] | 2005/0053633 | A1 | |
| | | | | EP | 1552958 | A2 | |
| | | | | DE | 20314685 | U1 | |
| | | | | BR | 400583 | A | |
| CN | 113493630 | A | 12 October 2021 | (Family: none) | | | |
| JP | 02-155965 | A | 15 June 1990 | US full text | 5075054 | A | |
| | | | | DE | 3835241 | C1 | |
| | | | | FR | 2637906 | A | |
| JP | 01-217090 | A | 30 August 1989 | (Family: none) | | | |
| JP | 2004-285250 | A | 14 October 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H912960 A
- JP H9176553 A
- JP 2015160887 A
- JP 2008000935 A